Europäisches Patentamt

European Patent Office

Office européen des brevets

(19)

(11) Numéro de publication : **0 165 129**
**B1**

(12) **FASCICULE DE BREVET EUROPÉEN**

(45) Date de publication du fascicule du brevet :
**02.03.88**

(51) Int. Cl.⁴ : **B 25 J 19/00**

(21) Numéro de dépôt : **85400938.8**

(22) Date de dépôt : **14.05.85**

(54) **Dispositif d'équilibrage des forces de pesanteur dans un bras robotique.**

(30) Priorité : 29.05.84 FR 8408383

(43) Date de publication de la demande :
**18.12.85 Bulletin 85/51**

(45) Mention de la délivrance du brevet :
**02.03.88 Bulletin 88/09**

(84) Etats contractants désignés :
**AT BE CH DE GB IT LI LU NL SE**

(56) Documents cités :
**DE-C-  951 661**
**FR-A- 1 210 402**
**FR-A- 2 437 538**
**FR-A- 2 532 578**
**US-A- 2 839 938**

(73) Titulaire : **ECOLE CENTRALE DES ARTS ET MANU-
FACTURES**
**Grande Voie des Vignes**
**F-92290 Chatenay-Malabry (FR)**

(72) Inventeur : **Herve, Jacques**
**50, rue Pasteur**
**F-77120 Pommeuse (FR)**

(74) Mandataire : **Peuscet, Jacques et al**
**Cabinet Peuscet 68, rue d'Hauteville**
**F-75010 Paris (FR)**

EP 0 165 129 B1

Jouve, 18, rue St-Denis, 75001 Paris, France

### Description

L'invention est relative à un dispositif d'équilibrage des forces de pesanteur dans un bras robotique, ou analogue, articulé en rotation autour d'un axe horizontal.

Lorsqu'un bras robotique n'est pas équilibré vis-à-vis de la pesanteur, les moteurs ou actionneurs, qui entraînent ce bras, doivent vaincre les couples créés par les forces de pesanteur. Par contre, si le bras est équilibré par rapport à la pesanteur, l'énergie des moteurs ou actionneurs est entièrement consacrée à l'entraînement du bras par rapport à l'inertie et au frottement et, parfois aussi, par rapport à des résistances magnétiques.

De ce fait, les bras robotiques actuellement construits sont généralement dotés d'un système d'équilibrage.

Toutefois, les systèmes d'équilibrage proposés jusqu'à ce jour sont approximatifs.

L'invention a pour but, surtout, de fournir un dispositif d'équilibrage des forces de pesanteur dans un bras robotique qui permet d'obtenir un équilibrage rigoureux avec des possibilités d'un grand débattement angulaire du bras. Il convient en outre qu'un tel dispositif d'équilibrage ne provoque pas de phénomènes dynamiques parasites importants.

Selon l'invention, un dispositif d'équilibrage des forces de pesanteur dans un bras robotique, ou analogue, articulé en rotation autour d'un axe horizontal, comprenant :

- une pièce auxiliaire rigide articulée autour d'un second axe horizontal parallèle à celui du bras robotique, cette pièce auxiliaire comportant deux bras transversaux s'étendant de part et d'autre du second axe, les extrémités de ces deux bras transversaux étant symétriques par rapport à ce second axe et déterminant une droite qui coupe le second axe, ces extrémités étant en outre propres à s'appuyer contre une partie rectiligne d'un organe mobile en translation soumis à un effort de rappel, vers une position initiale, proportionnel à la distance entre cette position initiale et la position occupée par ledit organe mobile,

- des moyens d'entraînement en rotation de la pièce auxiliaire, autour du second axe, à une vitesse angulaire égale, en valeur absolue, à la moitié de celle du bras robotique, l'ensemble étant calé angulairement de telle sorte que, lorsque le bras robotique est vertical, les deux extrémités des bras transversaux appuient simultanément sur ladite partie rectiligne qui occupe ladite position initiale l'organe mobile n'étant alors soumis à aucun effort de rappel, la constante de proportionnalité (K) entre l'effort de rappel et l'amplitude du déplacement de l'organe mobile, et la distance (b) du second axe à l'extrémité des bras transversaux étant choisie de telle sorte que l'équilibrage soit assuré.

Si l'on désigne par P la somme des forces verticales produites par la pesanteur sur le bras robotique, et par R la distance entre le centre d'action de ces forces de pesanteur sur le bras robotique et l'axe de rotation du bras robotique, l'équilibrage est assuré lorsque K et b sont choisis de telle sorte que la relation $1/4\,Kb^2 = PR$ soit satisfaite.

Généralement, l'organe mobile en translation est guidé par un mécanisme de translation rectiligne suivant une direction qui coupe le second axe et qui est orthogonale à ce second axe. La partie rectiligne, contre laquelle peuvent s'appuyer les extrémités des bras transversaux, est orthogonale à la direction de translation. De préférence, l'organe mobile en translation admet un axe de symétrie parallèle à sa direction de translation. Avantageusement, la direction de translation de l'organe mobile est la direction verticale.

Les moyens pour exercer l'effort de rappel de l'organe mobile en translation comprennent au moins un ressort à raideur constante.

Chaque extrémité des bras transversaux peut être munie d'un galet, ou analogue, propre à rouler contre la partie rectiligne de l'organe mobile.

Les moyens d'entraînement en rotation de la pièce auxiliaire, à une vitesse angulaire égale à la moitié de celle du bras robotique, peuvent comprendre un mécanisme matérialisant un triangle isocèle dont un des deux côtés égaux relie l'axe de rotation du bras robotique à l'axe de rotation de la pièce et dont l'autre des deux côtés égaux relie l'axe de rotation du bras robotique à l'articulation d'une coulisse tournante d'une longueur variable, l'autre extrémité de cette coulisse étant articulée sur l'axe de rotation de la pièce auxiliaire.

Le second axe de rotation, pour la pièce auxiliaire, peut être situé à la verticale de l'axe de rotation du bras robotique, notamment au-dessous de cet axe.

L'organe mobile en translation peut être constitué par une pièce ayant sensiblement la forme d'un T dont la branche transversale correspond à la partie rectiligne sur laquelle peuvent s'appuyer les extrémités des bras transversaux.

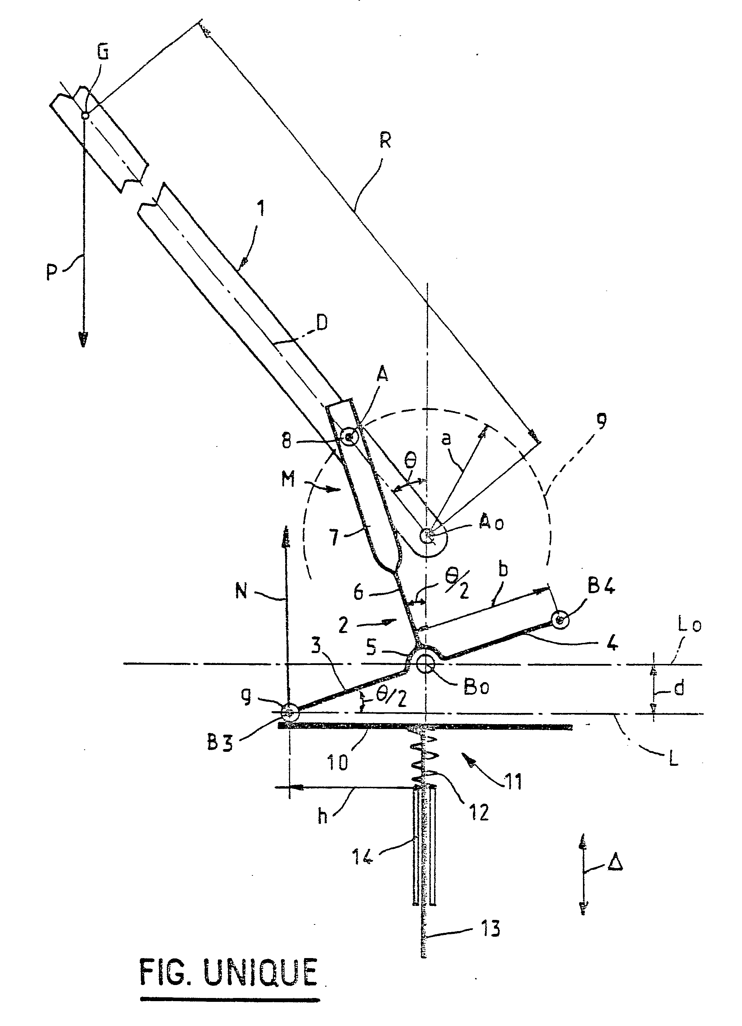

L'invention consiste, mises à part les dispositions exposées ci-dessus, en certaines autres dispositions dont il sera plus explicitement ci-après à propos d'un mode de réalisation particulier décrit avec référence au dessin ci-annexé, mais qui n'est nullement limitatif.

La figure unique, de ce dessin, est un schéma en élévation d'un dispositif d'équilibrage des forces de pesanteur dans un bras robotique conforme à l'invention.

En se reportant au dessin, on peut voir un dispositif destiné à équilibrer les forces de pesanteur dans les bras robotiques comportant des articulations de rotation autour d'axes horizontaux. L'invention va être décrite pour un seul bras robotique 1 pivotant autour d'un seul axe horizontal Ao. Toutefois, l'invention concerne également les bras articulés autour de plusieurs axes restant horizontaux.

Avant de décrire l'invention proprement dite, il est utile de donner les quelques précisions suivantes.

On a désigné par Ao la projection sur le plan de la figure de l'axe horizontal de pivotement du bras de robot 1 à équilibrer. On désigne par $\theta$ l'angle de déviation par rapport à la verticale ascendante de la direction principale D du bras 1. Cette direction principale passe par Ao et par un point G qui est le centre d'action des forces de pesanteur sur le bras 1. Le point G peut être soit le centre de gravité du bras 1, soit un point plus éloigné de Ao que le centre de gravité, et correspondant à l'équilibre de la pesanteur du bras et des forces transmises par contact dans une éventuelle articulation suivante. On démontre que le point G est un point fixe sur le bras 1 lorsque les segments articulés non considérés sont équilibrés.

Si l'on désigne par R la distance Ao-G et par P la somme des forces verticales représentée par une flèche, en G, produites par la pesanteur sur le bras 1, le moment en Ao des forces créées par la pesanteur sur le bras 1 a pour expression mathématique :

$$PR \sin \theta$$

sin $\theta$ étant le sinus de l'angle $\theta$ d'inclinaison du bras Ao-G par rapport à la verticale ascendante.

Le dispositif d'équilibrage conforme à l'invention est agencé pour exercer, en permanence, sur le bras robotique 1, un moment de rotation, par rapport à Ao, de même amplitude mais de sens opposé à celui créé par les forces de pesanteur.

Le dispositif d'équilibrage comprend une pièce auxiliaire rigide 2 articulée autour d'un second axe Bo horizontal, représenté par sa trace sur le plan de la figure. Cet axe Bo est parallèle au premier axe Ao et est maintenu fixe par rapport à ce dernier.

Dans l'exemple de réalisation représenté sur le dessin, l'axe Bo est situé à la verticale de l'axe Ao, et au-dessous de Ao. Toutefois, l'axe Bo peut être situé en un endroit quelconque, en dehors du plan vertical passant par l'axe Ao.

La pièce auxiliaire 2 comporte deux bras transversaux 3, 4 s'étendant de part et d'autre du second axe Bo. Les extrémités B3, B4 de ces deux bras transversaux déterminent une droite qui coupe le second axe Bo, les extrémités B3, B4 étant symétriques par rapport à ce second axe Bo. De préférence, les bras 3 et 4 sont rectilignes, et alignés suivant la droite joignant les extrémités B3, B4 ; cette droite est orthogonale à l'axe Bo ; un palier d'articulation 5, schématiquement représenté, est prévu à la jonction des bras 3 et 4 pour leur montage en rotation sur l'axe Bo. Chaque extrémité B3, B4 peut être équipée d'un galet rotatif g.

Des moyens M d'entraînement en rotation de la pièce auxiliaire 2, autour du second axe Bo à une vitesse angulaire $\omega$ égale à la moitié de la vitesse angulaire $\Omega$ du bras robotique 1 autour de l'axe Ao sont prévus. On a donc la relation $\omega = 1/2\Omega$, en valeur absolue. La pièce auxiliaire 2 peut tourner dans le même sens ou en sens inverse du bras robotique 1.

Les moyens d'entraînement M peuvent être constitués par des moyens de liaison mécanique entre la rotation du bras 1 autour de Ao et celle de la pièce auxiliaire 2 autour de Bo. De tels moyens peuvent être constitués par un mécanisme à chaîne, à courroie, ou autre flexible inextensible, ou par un mécanisme à engrenages ou par un mécanisme articulé.

Selon la représentation du dessin, les moyens M comprennent un mécanisme articulé matérialisant un triangle isocèle A, Ao, Bo. Les deux côtés égaux, de longueur constance a, de ce triangle isocèle sont AAo d'une part et AoBo d'autre part. Il en résulte que l'angle de AAo avec la verticale sera toujours le double de celui de ABo avec la verticale, et les vitesses angulaires sont dans le même rapport. Le troisième côté ABo a une longueur variable. La pièce rigide auxiliaire 2 a sensiblement la forme d'un T dont la branche transversale est formée par l'ensemble des bras 3 et 4 et dont la jambe 6 est dirigée vers le haut. Cette jambe 6 est munie d'un logement longitudinal 7 dans lequel peut coulisser un ergot 8 dont le centre correspond au point A, situé sur la droite D. Cet ergot 8 est solidaire du bras 1 et peut tourner avec ce dernier autour de l'axe Ao ; la trajectoire du centre A est matérialisée par l'arc de cercle 9 en tirets, de rayon a.

Les extrémités B3, B4 de la pièce 2 sont propres à s'appuyer contre une partie rectiligne 10 d'un organe 11 mobile en translation, soumis à un effort de rappel vers une position initiale pour laquelle les extrémités B3, B4 sont situées sur la ligne en traits mixtes Lo. Dans la position représentée sur le dessin, l'organe 11 est écarté de sa position initiale, et l'extrémité B3 qui est seule en appui contre la partie rectiligne 10 est située sur la ligne L, parallèle à Lo et située à une distance d de Lo. L'effort de rappel auquel est soumis l'organe mobile 11 est donc proportionnel à d.

Cet effort de rappel est assuré par un système comprenant au moins un ressort élastique 12, à raideur constante K. Sur le dessin, on a schématiquement représenté le ressort 12 par un ressort de compression en hélice. A la place d'un tel ressort de compression, on pourrait prévoir avantageusement un ressort de traction (qui serait disposé différemment) ne risquant pas de « flamber » sans guidage.

L'organe 11 peut avoir la forme d'un T. La partie rectiligne 10, formée par la branche transversale du T est horizontale et orthogonale à la jambe 13 de ce T qui est orientée vers le bas et est verticale.

L'organe mobile 11 est guidé par un mécanisme de translation rectiligne par exemple une glissière 14 dans laquelle est engagée la jambe 13 ; la direction $\Delta$ de translation de l'organe 11 est parallèle à la direction de la jambe 13, c'est-à-dire qu'elle est verticale.

Il est à noter que la partie rectiligne 10 peut être inclinée sur l'horizontale et que la direction de translation peut ne pas être verticale.

L'organe mobile 11 forme en quelque sorte un plateau. La partie rectiligne 10 peut être formée par une barre ou par une plaque notamment à contour rectangulaire ou circulaire. Ainsi, l'expression « partie rectiligne » doit être comprise comme désignant une partie qui se projette suivant une droite sur le plan de la figure du dessin.

L'effort de rappel exercé par le ou les ressorts 12 sur l'organe 11 et transmis à la pièce 2 a tendance à ramener le point A à la verticale au-dessus de l'axe Ao, c'est-à-dire que cette action de rappel est antagoniste à celle des forces de pesanteur agissant au point G et symbolisé par la flèche P.

De préférence, l'organe mobile 11 admet un axe de symétrie parallèle à la direction de translation, cet axe étant constitué, dans l'exemple représenté, par l'axe de la jambe 13.

L'ensemble est calé angulairement de telle sorte que, lorsque le bras robotique 1 est vertical, les deux extrémités B3, B4 des bras transversaux, qui sont situées sur la ligne Lo, appuient simultanément sur la partie rectiligne 10 qui occupe la position initiale et qui n'est alors soumise à aucune force de rappel.

La constante de proportionnalité K et la distance b du second axe Bo à l'extrémité B3 ou B4 des bras transversaux sont choisies de telle sorte que la relation :

$$1/4 \, Kb^2 = PR$$

soit satisfaite pour assurer l'équilibrage, P étant la somme des forces verticales produites par la pesanteur sur le bras robotique 1, et R étant la distance entre le centre d'action G et l'axe de rotation Ao.

Le fonctionnement du dispositif d'équilibrage est le suivant.

Lorsque le bras 1 est incliné d'un angle θ par rapport à la verticale ascendante, la pièce auxiliaire 2 est inclinée d'un angle θ/2 dans le même sens ou dans le sens opposé, selon le mécanisme de transmission adopté, par rapport à sa position initiale. L'organe mobile 11 sous l'action de l'une des extrémités, par exemple B3 selon le dessin, s'est déplacé d'une distance d par rapport à la position initiale avec :

$$d = b\sin \theta/2.$$

Le ou les ressorts élastiques 12 engendrent une force de rappel, sur l'organe mobile 11, égale à

$$K.d = Kb\sin \theta/2,$$

K étant la raideur constante du ressort.

Cette force de rappel est transmise, par la partie rectiligne 10 de l'organe 11 à l'une des extrémités, B3 selon la représentation du dessin, des bras transversaux de la partie 2.

Cette force N s'exerce à une distance, de l'axe Bo :

$$h = b\cos \theta/2$$

Le moment de cette force N par rapport à l'axe Bo, exercé sur la pièce 2, a pour valeur :

$$Nh = Kb\sin \theta/2 \cdot b\cos \theta/2 = 1/2Kb^2\sin \theta,$$

par application de la relation trigonométrique

$$\sin \theta = 2\sin \theta/2 \cdot \cos \theta/2.$$

Du fait que la vitesse de rotation du bras robotique 1 est le double de celle de la pièce 2, le couple qui sera transmis au bras robotique 1, à partir de la pièce 2, par les moyens d'entraînement M sera divisé par deux.

Ainsi, le couple antagoniste aux forces de pesanteur, exercé sur le bras 1 sera égal à :

$$1/2(1/2Kb^2\sin \theta) = 1/4Kb^2\sin \theta.$$

Ce couple équilibrera celui engendré par les forces de pesanteur si la relation suivante d'égalité est assurée :

$$PR\sin \theta = 1/4Kb^2\sin \theta.$$

Cette relation d'égalité sera satisfaite en permanence en raison du choix des valeurs de K et de b telles que :

$$1/4Kb^2 = PR.$$

Le dispositif d'équilibrage selon l'invention permet d'assurer un équilibrage rigoureux avec un grand débattement angulaire pouvant aller de — 150° à + 150° par rapport à la verticale ascendante. Ce dispositif est d'une construction relativement simple et utilise essentiellement des ressorts élastiques. Il ne provoque pas de phénomènes dynamiques parasites importants.

**Revendications**

1. Dispositif d'équilibrage des forces de pesanteur (P) dans un bras robotique (1), ou analogue, articulé en rotation autour d'un axe horizontal (Ao), caractérisé par le fait qu'il comprend :
- une pièce auxiliaire rigide (2) articulée autour d'un second axe horizontal (Bo) parallèle à celui (Ao) du bras robotique (1), cette pièce auxiliaire étant propre à s'appuyer contre une partie sensiblement rectiligne (10) d'un organe (11) mobile en translation soumis à un effort de rappel, vers une position initiale, proportionnel à la distance (d) entre cette position initiale et la position occupée par ledit organe mobile,
- des moyens d'entraînement (M) en rotation de la pièce auxiliaire (2), autour du second axe (Bo), à une vitesse angulaire sensiblement égale, en valeur absolue, à la moitié de celle du bras robotique (1),

l'ensemble étant calé angulairement de telle sorte que lorsque le bras robotique (1) est vertical et que ladite partie rectiligne (10) occupe ladite position initiale, l'organe mobile n'est alors soumis à aucun effort de rappel, la constante de proportionnalité (K) entre l'effort de rappel et l'amplitude du déplacement de l'organe mobile, et la distance (b) du second axe (Bo) à l'extrémité de la pièce auxiliaire étant choisies de telle sorte que l'équilibrage soit assuré.

2. Dispositif selon la revendication 1, caractérisé par le fait que la pièce auxiliaire (2) comporte deux bras transversaux (3, 4) s'étendant de part et d'autre du second axe, les extrémités (B3, B4) de ces deux bras transversaux étant symétriques par rapport à ce second axe (Bo) et déterminant une droite qui coupe le second axe, ces extrémités étant propres à s'appuyer contre la susdite partie rectiligne.

3. Dispositif selon la revendication 1 ou 2, caractérisé par le fait que la constante de proportionnalité (K) et la distance (b) du second axe (Bo) à l'extrémité des bras transversaux sont choisies de telle sorte que la relation 1/4 Kb² = PR soit satisfaite, P désignant la somme des forces verticales produites par la pesanteur sur le bras robotique (1) et R désignant la distance entre le centre d'action (G) de ces forces de pesanteur sur le bras robotique (1) et l'axe de rotation (Ao) du bras robotique.

4. Dispositif selon l'une quelconque des revendications précédentes, caractérisé par le fait que l'organe mobile en translation (11) est guidé par un mécanisme de translation rectiligne (14).

5. Dispositif selon l'une quelconque des revendications précédentes, caractérisé par le fait que les moyens pour exercer l'effort de rappel de l'organe mobile en translation comprennent au moins un ressort (12).

6. Dispositif selon la revendication 5, caractérisé par le fait que le ressort (12) est un ressort à raideur constante (K).

7. Dispositif selon l'une quelconque des revendications précédentes, caractérisé par le fait que chaque extrémité (B3, B4) des bras transversaux est munie d'un galet (g), ou analogue, propre à rouler contre la partie rectiligne (10) de l'organe mobile (11).

8. Dispositif selon l'une quelconque des revendications précédentes, caractérisé par le fait que les moyens (M) d'entraînement en rotation de la pièce auxiliaire (2), à une vitesse angulaire égale à la moitié de celle du bras robotique, comprennent un mécanisme matérialisant un triangle isocèle (A, Ao, Bo) dont un des deux côtés égaux relie l'axe de rotation (Ao) du bras robotique (1) à l'axe de rotation (Bo) de la pièce (2) et dont l'autre des deux côtés égaux relie l'axe de rotation (Ao) du bras robotique à l'articulation (A) d'une coulisse tournante (7, 8) d'une longueur variable, l'autre extrémité de cette coulisse étant articulée sur l'axe de rotation (Bo) de la pièce auxiliaire (2).

9. Dispositif selon l'une quelconque des revendications précédentes, caractérisé par le fait que l'organe (11) mobile en translation est constitué par une pièce ayant sensiblement la forme d'un T dont la branche transversale correspond à la partie rectiligne (10) sur laquelle peuvent s'appuyer les extrémités (B3, B4) des bras transversaux.

**Claims**

1. A device for counter-balancing the gravity forces (P) on a robot arm (1) or a similar structure, hinged for rotation about a horizontal axis (Ao), characterized by the fact that it comprises :

- a rigid auxiliary component (2) hinged about a second horizontal axis (Bo) parallel to said horizontal axis (Ao) of the robot arm (1), said auxiliary component being capable of bearing against a substantially straight portion (10) of a component (11) which is movable in translation and is subjected to a biasing force towards an initial position, said force being proportional to the distance (d) between said initial position and the instantaneous position of said movable component ;

- means (M) for driving said auxiliary component (2) rotatably about the second horizontal axis (Bo) at an angular velocity whose modulus is substantially equal to half that of said robot arm (1)

the assembly being calibrated angularly, such that when the robot arm (1) is vertical and the said straight portion (10) occupies the said initial position, the movable component is not subjected to any biasing force, the constant of proportionality (K) between said biasing force and the amplitude of the displacement of said movable component, and the distance (b) from said second axis (Bo) to the end of the auxiliary component being chosen in such a way that counter-balancing is achieved.

2. A device according to claim 1 characterized by the fact that the auxiliary component (2) comprises two transverse arms (3, 4) extending on each side of said second axis, the distal ends (B3, B4) of said two transverse arms being symmetrical relative to said second axis (Bo) and forming a straight line which intersects said second axis, said ends being adapted to bear against said straight portion.

3. A device according to claim 1 or 2, characterized by the fact that the constant of proportionality (K), and the distance (b) from said second axis (Bo) to the end of the transverse arms are chosen such that the expression 1/4Kb² = PR is satisfied, where P represents the sum of the vertical gravity forces on the robot arm (1), and R represents the distance between the centre of action (G) of the gravitational forces on the robot arm (1) and the axis of rotation (Ao) of the robot arm.

4. A device according to any one of the preceding claims characterized by the fact that the translationally movable component (11) is guided by a rectilinear translation mechanism (14).

5. A device according to any one of the preceding claims characterized by the fact that said means for subjecting said translationally movable component to a biasing force includes at least one spring means (12).

6. A device according to claim 5, characterized by the fact that said spring means (12) is a spring means having a constant stiffness (K).

7. A device according to any one of the preceding claims, characterized by the fact that each distal end (B3, B4) of said transverse arms is provided with a respective roller (g), or a similar component, capable of rolling against said straight portion (10) of said movable component (11).

8. A device according to any one of the preceding claims, characterized by the fact that said means (M) for driving said auxiliary component (2) rotatably at an angular velocity equal to half that of the robot arm includes a mechanism forming an isosceles triangle (A, Ao, Bo) having one of its two equal sides joining said axis of rotation (Ao) of the robot arm (1) to the axis of rotation (Bo) of the component (2), and the other of its two equal sides joining the axis of rotation (Ao) of the robot arm to the articulation means (A) of a rotary slide (7, 8) having a variable length, the other end of said rotary slide being hinged on said axis of rotation (Bo) of the auxiliary component (2).

9. A device according to any one of the preceding claims, characterized by the fact that the translationally movable component (11) is essentially in the shape of a T whose transverse branch defines said straight portion (10) against which said distal ends (B3, B4) of the transverse arms bear.

## Patentansprüche

1. Vorrichtung zum Ausgleichen der Schwerkräfte (P) an einem Roboterarm (1) oder dergleichen, der um eine horizontale Achse (Ao) drehbar gelagert ist, gekennzeichnet durch :
- ein steifes Hilfsstück (2), das an einer zweiten horizontalen Achse (Bo), die parallel zur Achse (Ao) des Roboterarmes (1) verläuft, befestigt und um diese schwenkbar ist, wobei das Hilfsstück sich an einem im wesentlichen geradlinigen Teil (10) eines beweglichen und verschiebbaren Organs (11) abstützt, auf das eine Rückstellkraft in Richtung auf eine Ausgangsposition einwirkt, die dem Abstand (d) zwischen der Ausgangsposition und der durch das bewegliche Organ eingenommenen Position entspricht,
- Antriebsmittel (M) zum Drehen des Hilfsstückes (2) um die zweite Achse (Bo) mit einer Winkelgeschwindigkeit, die — in absoluten Werten — im wesentlichen halb so groß ist wie diejenige des Roboterarmes (1) ;
wobei das Ganze in Bezug auf die Winkel so angeordnet ist, daß, wenn der Roboterarm (1) vertikal ist und das gradlinige Teil (10) die Ausgangslage einnimmt, das bewegliche Organ (11) keiner Rückstellkraft unterworfen ist und wobei die Proportionalitätskonstante (K) zwischen der Rückstellkraft und der Amplitude der Verschiebung des beweglichen Organs, und der Abstand (b) der zweiten Achse (Bo) vom Ende des Hilfsstückes so gewählt werden, daß Gleichgewicht gewährleistet ist.

2. Vorrichtung nach Anspruch 1, dadurch gekennzeichnet, daß das Hilfsstück (2) zwei Querarme (3, 4) aufweist, die sich beiderseits der zweiten Achse erstrecken, wobei die Enden (B3, B4) der beiden Querarme symmetrisch zur zweiten Achse (Bo) angeordnet sind und eine Gerade beschreiben, welche die zweite Achse schneidet und wobei die Enden sich an dem geradlinigen Teil abstützen können.

3. Vorrichtung nach Anspruch 1 oder 2, dadurch gekennzeichnet, daß die Proportionalitätskonstante (K) und der Abstand (b) der zweiten Achse (Bo) vom Ende der Querarme so gewählt werden, daß die Beziehung $1/4\ Kb^2 = PR$ erfüllt ist, wobei P für die Summer der vertikalen Kräfte steht, die von der Schwerkraft auf den Roboterarm (1) ausgeübt werden und R für den Abstand zwischen dem Aktionszentrum (G) der am Roboterarm (1) angreifenden Schwerkräfte und der Drehachse (Ao) des Roboterarmes steht.

4. Vorrichtung nach einem der vorhergehenden Ansprüche, dadurch gekennzeichnet, daß das bewegliche und verschiebbare Organ (11) in einem geradlinigen Verschiebemechanismus (14) geführt ist.

5. Vorrichtung nach einem der vorhergehenden Ansprüche, dadurch gekennzeichnet, daß die Mittel zur Ausübung der Rückstellkraft des beweglichen und verschiebbaren Organs wenigstens eine Feder (12) umfassen.

6. Vorrichtung nach Anspruch 5, dadurch gekennzeichnet, daß die Feder (12) eine Feder mit konstanter Steifigkeit (K) ist.

7. Vorrichtung nach einem der vorhergehenden Ansprüche, dadurch gekennzeichnet, daß jedes Ende (B3, B4) der Querarme mit einer Rolle (g) oder dergleichen versehen ist, die an dem geradlinigen Teil (10) des beweglichen Organs (11) abrollen kann.

8. Vorrichtung nach einem der vorhergehenden Ansprüche, dadurch gekennzeichnet, daß die Antriebsmittel (M), mit denen das Hilfsstück (2) mit einer Winkelgeschwindigkeit gedreht wird, die halb so groß ist wie diejenige der Roboterarme, einen Mechanismus umfassen, der ein gleichschenkliges Dreieck (A, Ao, Bo) darstellt, von dem eine der beiden gleichen Seiten die Drehachse (Ao) des Roboterarmes (1) mit der Drehachse (Bo) des Stückes (2) verbindet und von dem die andere der beiden gleichen Seiten die Drehachse (Ao) des Roboterarmes mit der Drehbefestigung (A) einer Gleitkurbel (7, 8) variabler Länge verbindet, und wobei das andere Ende der Gleitkurbel an der Drehachse (Bo) des Hilfsstückes (2) befestigt ist.

9. Vorrichtung nach einem der vorhergehenden Ansprüche, dadurch gekennzeichnet, daß das bewegliche und verschiebbare Organ (11) aus einem Stück besteht, das im wesentlichen T-förmig ist und dessen Querbalken dem geradlinigen Teil (10) entspricht, auf dem sich die Enden (B3, B4) der Querarme abstützen können.

FIG. UNIQUE

0 165 129